# EUROPÄISCHE PATENTSCHRIFT

(11) **EP 0 526 399 B1**
(45) Veröffentlichungstag und Bekanntmachung des Hinweises auf die Patenterteilung: **27.09.1995**
(21) Anmeldenummer: 92810556.8
(22) Anmeldetag: 21.07.1992
(51) Int. Cl.: C09D 127/12, C09D 143/04, C09D 133/06

(54) **Lichtstabilisierte Copolymer-Zusammensetzungen als Bindemittel für Lacke**
Light-stabilized copolymer compositions as a binder in coating films
Compositions de copolymères stabilisés à la lumière pour peintures

(30) Priorität: 29.07.1991 CH 2253/91
(43) Veröffentlichungstag der Anmeldung: 03.02.1993
(73) Patentinhaber: Ciba Specialty Chemicals Holding Inc., 4057 Basel (CH)
(72) Erfinder: Valet, Andreas, Dr., W-7859 Eimeldingen (DE); Meuwly, Roger, Dr., CH-1723 Marly (CH); Slongo, Mario, Dr., CH-1712 Tafers (CH)

(56) Entgegenhaltungen:
- EP-A- 0 441 746

## Beschreibung

Die Erfindung betrifft ein Gemisch von zwei Copolymeren und mindestens einem Härter und die Verwendung dieses Gemisches als Bindemittel für Lacke. Das eine Copolymere enthält Fluor oder Silizium und einen UV-Absorber, der mittels einer reaktiven Gruppe an das Copolymere gebunden ist. Das andere Copolymere ist ein Acrylharz.

Neuerdings sind Fluor oder Silizium enthaltende Copolymere als Bindemittel für hochwertige Anstrichstoffe bekannt geworden. Diese Copolymere verleihen den Anstrichen hohe Witterungsbeständigkeit, hohen Glanz und Schmutzabweisung. Diese Materialien sind daher vor allem für Außenanwendungen interessant, und für diese Zwecke hat man solchen Lacken auch schon UV-Absorber zugesetzt, um ihre Resistenz gegen UV-Licht zu erhöhen. Diese Entwicklungen sind z.B. in Progress in Organic Coatings 16(1988), 113-134, beschrieben worden.

Da sich in Außenschichten eines Anstrichs die zugesetzten UV-Absorber im Laufe der Zeit verflüchtigen können oder diese eluiert werden können, hat man bereits vorgeschlagen (US-A 4,576,977) einen UV-Absorber vom Typ der Benzophenone durch Reaktion mit dem Vernetzungsmittel an das Bindemittel zu binden. Hierbei werden Benzophenon-UV-Absorber mit reaktiven Hydroxylgruppen verwendet, die z.B. bei der Härtung mit einem Melaminharz-Vernetzer reagieren.

Wegen des hohen Preises von Fluor oder Silizium enthaltenden Copolymeren verwendet man diese vorteilhaft im Gemisch mit Bindemitteln, die frei von Fluor oder Silizium sind, z.B. mit Acrylat-Copolymeren (GB-A-2 192 399).

Aufgabe der Erfindung war es, eine weitere Verbesserung von solchen Systemen zu finden.

Es wurde nun gefunden, daß überraschenderweise eine besonders gute lichtstabilisierende Wirkung erzielt wird, wenn ein UV-Absorber an das Fluor oder Silizium enthaltende Copolymere gebunden wird. Die Erfindung betrifft daher eine härtbare Zusammensetzung enthaltend (a) ein Fluor oder Silizium enthaltendes Copolymer, (b) ein (Meth)Acryl-Copolymer, und (c) mindestens einen Härter, wobei jedes der beiden Copolymeren funktionelle Gruppen enthält, die mit dem Härter reagieren können, die dadurch gekennzeichnet ist, daß das Fluor oder Silizium enthaltende Copolymer (a) einen UV-Absorber enthält, der durch Reaktion mit den freien reaktiven Gruppen des fertigen Copolymers chemisch gebunden ist.

Wichtig ist dabei zu betonen, daß Komponente (a) der erfindungsgemäßen Zusammensetzung das Produkt der Umsetzung des Fluor oder Silizium enthaltenden Copolymers mit dem reaktiven UV-Absorber ist (polymeranaloge Umsetzung).

Das Copolymer (b) enthält zweckmäßig keinen UV-Absorber in gebundener Form.

Die Erfindung betrifft auch Verfahren zur Herstellung einer härtbaren Zusammensetzung, dadurch gekennzeichnet, daß ein Fluor oder Silizium enthaltendes Copolymer, das freie funktionelle Gruppen enthält, mit einem UV-Absorber, der reaktive Gruppen enthält, die mit den funktionellen Gruppen des Copolymers reagieren können, umgesetzt wird, und das Produkt mit einem (Meth)Acryl-Copolymer, das ebenfalls funktionelle Gruppen enthält, und einem Härter gemischt wird.

Gegenstand der Erfindung ist auch ein Klarer oder pigmentierter Lack, der als Bindemittel eine wie oben beschriebene Zusammensetzung enthält, sowie der gehärtete Lackfilm, der durch Härtung eines solchen Lackes erhalten wird. Der Lack kann ein Lichtschutzmittel aus der Klasse der sterisch gehinderten Amine, bevorzugt ein Derivat des 2,2,6,6-Tetramethylpiperidins enthalten.

Erfindungsgemäß Verwendung finden vor allem reaktive UV-Absorber aus der Klasse der 2-(2-Hydroxyphenyl)-benzotriazole, der 2-(2-Hydroxyphenyl)-1,3,5-triazine, der Oxalanilide oder der o-Hydroxybenzophenone, insbesondere solche aus der Klasse der 2-(2-Hydroxyphenyl)-benzotriazole und 2-(2-Hydroxyphenyl)-1,3,5-triazine.

Bevorzugt enthält der reaktive UV-Absorber eine Hydroxyl-, Carboxyl- oder Epoxidgruppe.

Enthält das Copolymer Carboxylgruppen, so kann der reaktive UV-Absorber z.B. eine Hydroxylgruppe enthalten, bevorzugt enthält der UV-Absorber jedoch eine Epoxidgruppe, insbesondere eine Glycidylgruppe 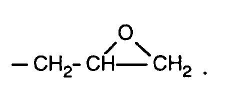
Enthält das Copolymer Hydroxylgruppen, so kann der reaktive UV-Absorber z.B. Carboxyl- oder Epoxidgruppen enthalten.
Enthält das Copolymer Epoxidgruppen, so kann der reaktive UV-Absorber z.B. Carboxyl-oder Hydroxylgruppen enthalten.
Das Copolymer und der UV-Absorber können auch mehrere verschiedene funktionelle Gruppen enthalten, z.B. Hydroxyl- und Carboxylgruppen oder Hydroxyl- und Epoxidgruppen.

Vorzugsweise werden Copolymer und UV-Absorber durch Reaktion von Epoxidgruppen mit Carboxyl- oder Hydroxylgruppen aneinander gebunden.

Bevorzugt ist eine Zusammensetzung, worin die Copolymeren (a) und (b) Hydroxylgruppen enthalten und der Härter eine Verbindung ist, die mit Hydroxylgruppen reagieren kann.

Das Copolymere enthält entweder eine fluororganische Komponente oder eine siliziumorganische Komponente in copolymerisierter Form. Das Copolymer (a) kann auch ein copolymerisierbares sterisch gehindertes Amin enthalten, wie es in EP-A-441 746 beschrieben ist.

Von besonderem Interesse ist eine Zusammensetzung, worin die Komponente (a) ein Fluor enthaltendes Copolymer ist.

Wenn es eine fluororganische Komponente enthält, so ist es vorzugsweise ein Copolymer aus
(1) einem Polyfluorolefin,
(2) mindestens einem Alkyl- und/oder Cycloalkyl-vinylether,
(3) einem Hydroxyalkyl-vinylether,
(4) gegebenenfalls weiteren copolymerisierbaren Verbindungen.

Beispiele für Polyfluorolefine sind 1,1-Difluorethylen, Tetrafluorethylen oder Hexafluorpropylen, insbesondere aber Chlortrifluorethylen. Bevorzugt enthält das Copolymer mindestens 30 Gew.-% Chlortrifluorethylen.

Beispiele für Alkyl-vinylether sind Methyl-, Ethyl-, Propyl-, Isopropyl-, Butyl-, Hexyl- oder Octyl-vinylether.

Ein Beispiel für Cycloalkyl-vinylether ist der Cyclohexyl-vinylether.

Beispiele für Hydroxyalkyl-vinylether sind 3-Hydroxypropyl-, 4-Hydroxybutyl- oder 5-Hydroxypentyl-vinylether.

Beispiele von weiteren copolymerisierbaren Verbindungen (Komponente 4) sind Styrol, α-Methylstyrol, Acryl- und Methacrylsäure und deren Alkylester, Acrylnitril, Maleinsäuremono- oder -dialkylester oder Maleinsäureimide.

Das Copolymer kann als weitere copolymerisierbare Verbindung auch ein copolymerisierbares sterisch gehindertes Amin enthalten. Beispiele von hierfür geeigneten sterisch gehinderten Aminen sind 2,2,6,6-Tetramethyl-4-piperidyl-acrylat oder -methacrylat und 1,2,2,6,6-Pentamethyl-4-piperidyl-acrylat oder -methacrylat.

Die Komponente (1) ist vorzugsweise Chlortrifluorethylen und dessen Gehalt im Copolymeren beträgt vorzugsweise mindestens 30 Gew.-%.

Vorzugsweise besteht das fluorhaltige Copolymere a) aus 30-60 Gew.-% der Komponente (1), 20-50 Gew.-% der Komponente (2), 5-20 Gew.-% der Komponente (3), und 0-15 Gew.-% der Komponente (4).

Beispiele für fluorhaltige Copolymere mit reaktiven Gruppen sind Copolymere von Chlortrifluorethylen und Hydroxyalkylacrylaten, Hydroxyalkylvinylethem, N-Hydroxyalkylacrylamiden, Acrylsäure, Methacrylsäure, Maleinsäure, Maleinsäurehalbestern, Crotonsäure, Glycidylacrylat oder Glycidylmethacrylat.

Ein Beispiel für die Herstellung eines erfindungsgemäßen fluorhaltigen Copolymers ist im folgenden schematisch wiedergegeben:
Durch Umsetzung eines Vinylethers mit einem Hydroxyvinylether und Chlortrifluorethylen erhält man ein fluorhaltiges Copolymer: 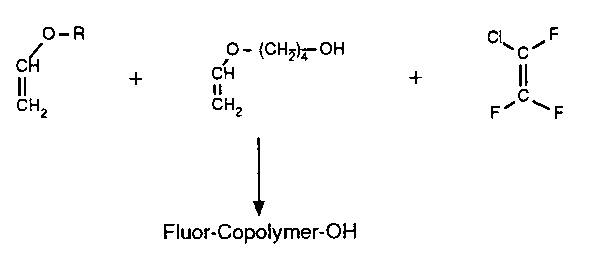
R steht für einen organischen Rest.
Dieses "Präpolymer" läßt sich beispielsweise mit Bernsteinsäureanhydrid zu einem mit einer reaktiven Carboxyl-Endgruppe modifizierten Fluor-Copolymer umsetzen: 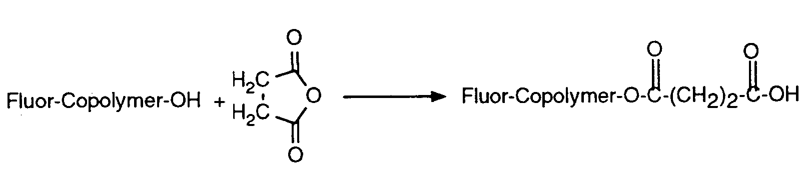
Diese Carboxyl-Endgruppe ist nun in der Lage, einen mit einer reaktiven Epoxidgruppe modifizierten UV-Absorber zu binden: 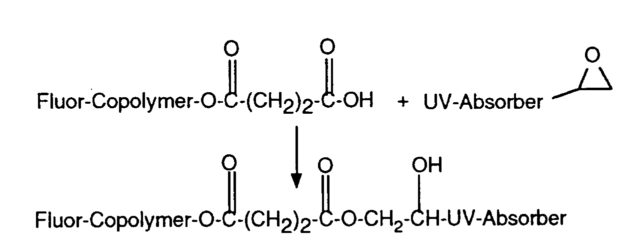
Ebenfalls von besonderem Interesse ist eine Zusammensetzung, worin die Komponente (a) ein Silizium enthaltendes Copolymer ist.

Wenn das Copolymere eine siliziumorganische Komponente enthält, so ist es vorzugsweise ein Copolymer aus
(1) einer ethylenisch ungesättigten Organosiliziumverbindung,
(2) mindestens einem Alkyl- acrylat oder -methacrylat,
(3) einem Hydroxyalkyl(meth)acrylat und/oder Epoxyalkyl(meth)acrylat und
(4) gegebenenfalls weiteren copolymerisierbaren Verbindungen.

Ethylenisch ungesättigte Organosiliziumverbindungen sind z.B. Vinylsiliziumverbindungen, Allylsiliziumverbindungen oder Silizium enthaltende (Meth)acrylate.

Beispiele von siliziumhaltigen Copolymeren mit reaktiven Gruppen sind Copolymere von ungesättigten Organosiliziumverbindungen und Acryl- oder Methacrylaten, Acryl-oder Methacrylsäure, Hydroxyalkyl(meth)acrylaten, N-Hydroxyalkyl(meth)acrylamiden oder Glycidyl(meth)acrylat.

Beispiele von siliziumhaltigen Copolymeren mit reaktiven Gruppen sind Copolymere von ungesättigten Organosiliziumverbindungen der Formel 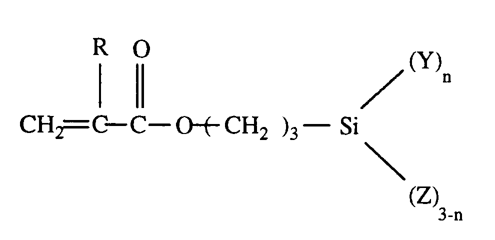
oder 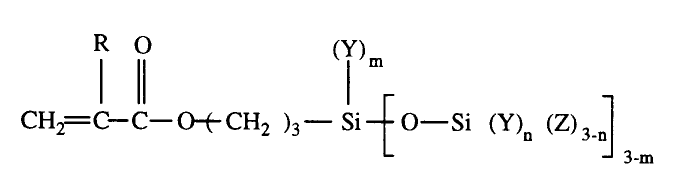
worin n 0-3, m 0-3, R Wasserstoff oder Methyl, Y C₁-C₈-Alkyl oder Phenyl und Z C₁-C₈-Alkoxy oder -OCH₂CH₂OCH₃ bedeuten (Komponente 1), C₁-C₁₂-Alkyl(meth)-acrylaten (Komponente 2), und C₂-C₆-Hydroxyalkyl(meth)acrylaten oder Glycidyl(meth)-acrylat (Komponente 3).

Y als C₁-C₈-Alkyl kann geradkettig oder verzweigt sein und bedeutet beispielsweise Methyl, Ethyl, Propyl, i-Propyl, n-Butyl, s-Butyl, i-Butyl, t-Butyl, n-Pentyl, i-Pentyl, Hexyl, Heptyl, Octyl oder 2-Ethylhexyl, insbesondere Methyl.

Z als C₁-C₈-Alkoxy kann geradkettiges oder verzweigtes Alkyl am O-Atom tragen und ist zum Beispiel Methoxy, Ethoxy, Propyloxy, Butyloxy, t-Butyloxy, Pentyloxy, Hexyloxy, Heptyloxy, Octyloxy, insbesondere Methoxy und Butoxy.

Beispiele solcher Verbindungen der Komponente (1) sind:
1-[Dimethyl-(3-acryloyloxypropyl)]-3-trimethyldisiloxan,
1-[Dimethyl-(3-methacryloyloxypropyl)]-3-trimethyldisiloxan,
3-Methacryloyloxypropyl-3-trimethoxysilan,
3-Methacryloyloxypropyl-tris(trimethylsiloxy)silan.

Weitere Beispiele von Silizium enthaltenden Copolymeren sind in US-A-4,772,672 beschrieben.

Die als Komponente (2) verwendeten Alkyl(meth)acrylate haben vorzugsweise einen Alkylrest mit 1-12, insbesondere 1-8 C-Atomen. Beispiele hierfür sind Methyl-, Ethyl-, Propyl-, Butyl-, Hexyl-, Octyl-, 2-Ethylhexyl-, Decyl- oder Dodecyl-acrylat oder -methacrylat.

Die als Komponente (3) verwendeten Hydroxyalkyl(meth)acrylate haben vorzugsweise einen Hydroxyalkylrest mit 2-6 C-Atomen. Beispiele hierfür sind 2-Hydroxyethyl-, 3-Hydroxypropyl-, 4-Hydroxybutyl- oder 6-Hydroxyhexyl-acrylat oder -methacrylat.

Bevorzugte Beispiele für die als Komponente (3) verwendeten Epoxyalkyl(meth)acrylate sind, wie oben bereits erwähnt, Glycidylacrylat und Glycidylmethacrylat.

Als weitere copolymerisierbare Verbindungen (Komponente 4) können z.B. N-Hydroxyalkyl(meth)acrylamide, Vinylderivate, Acrylnitril, ungesättigte Carbonsäuren oder deren Ester verwendet werden; bevorzugt sind Styrol, α-Methylstyrol, Acrylsäure, Methacrylsäure oder Ester der Maleinsäure.

Das Copolymer kann als weitere copolymerisierbare Verbindung (4) auch ein copolymerisierbares sterisch gehindertes Amin enthalten. Beispiele von hierfür geeigneten sterisch gehinderten Aminen sind 2,2,6,6-Tetramethyl-4-piperidyl-acrylat oder -methacrylat und 1,2,2,6,6-Pentamethyl-4-piperidyl-acrylat oder -methacrylat.

Vorzugsweise besteht das siliziumhaltige Copolymere aus 5-40 Gew.-% der Komponente (1), 30-70 Gew.-% der Komponente (2), 5-20 Gew.-% der Komponente (3), und 0-30 Gew.-% der Komponente (4).

Bevorzugt sind Copolymerisate aus einer ethylenisch ungesättigten Organosiliziumverbindung, Acryl- oder Methacrylsäure, Styrol und mindestens einem Alkyl(meth)acrylat, die auch ein Hydroxyalkyl(meth)acrylat enthalten können.

Ein Beispiel für die Herstellung eines erfindungsgemäßen siliziumhaltigen Copolymers ist im folgenden schematisch wiedergegeben:
Durch Reaktion einer ungesättigten Siliziumverbindung mit einem Vinyl-Carboxylat und einer ungesättigten Carbonsäure erhält man ein siliziumhaltiges Copolymeres: 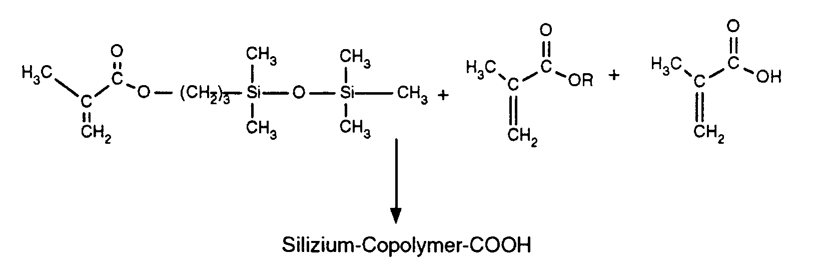
R bedeutet einen organischen Rest.
Die Umsetzung dieses Polymeren mit einem UV-Absorber, der als reaktive Gruppe einen Epoxid-Rest enthält, liefert dann das UV-Absorber-haltige Copolymer: 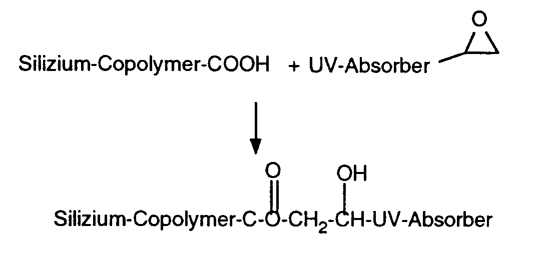
Eine andere Möglichkeit ist, daß das Siliziumcopolymere die reaktive Epoxid-Endgruppe enthält und der UV-Absorber eine -OH oder -COOH Funktion enthält. Dann sieht das Schema beispielsweise so aus: 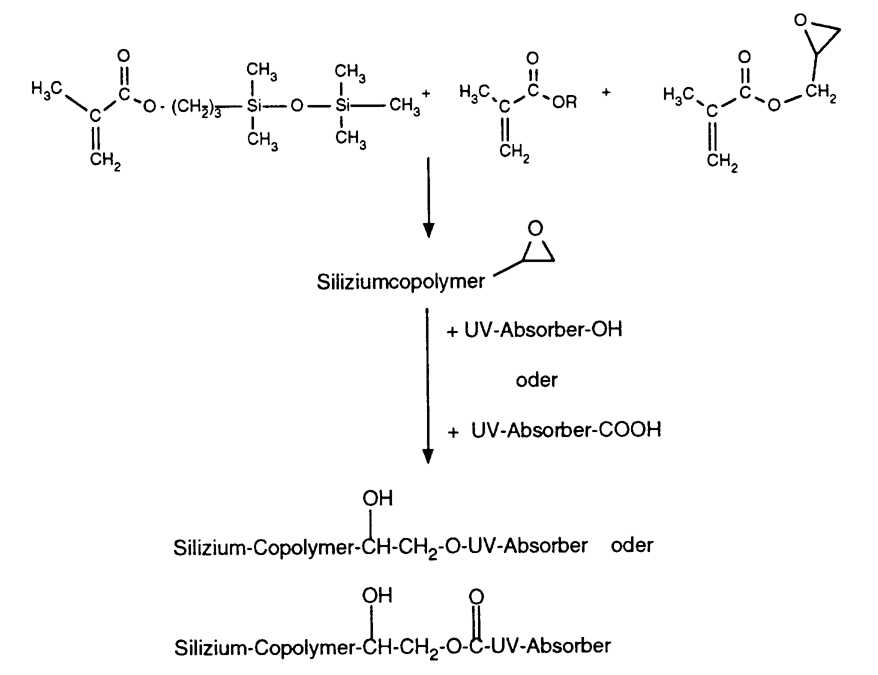
Die reaktiven Gruppen des Copolymers können auch durch Umsetzung eines Copolymers mit einem entsprechenden Reagenz hergestellt werden. Beispielsweise kann ein Copolymer, das Hydroxylgruppen enthält, mit einem Dicarbonsäureanhydrid umgesetzt werden zu einem Copolymeren, das Carboxylgruppen enthält.
Von besonderer Bedeutung sind in dieser Hinsicht Umsetzungsprodukte eines Copolymers aus Chlortrifluorethylen, Hydroxybutylvinylether und mindestens einem Alkyl-oder Cycloalkylvinylether mit einem Dicarbonsäureanhydrid, beispielsweise mit Succinanhydrid, Maleinanhydrid oder Phthalsäureanhydrid, wobei das Umsetzungsprodukt freie Carboxylgruppen enthält.

Die Copolymere können außer der Fluor- oder Siliziumverbindung und den reaktiven Comonomeren noch nicht-reaktive Comonomere enthalten, wie z.B. Alkylacrylate oder -methacrylate, Styrol, Acrylnitril, Alkylvinylether oder Acrylamid.

Die reaktiven UV-Absorber können als reaktive Gruppe z.B. eine Hydroxyl-, Carboxyl- oder Epoxidgruppe enthalten. Bevorzugt enthält der reaktive UV-Absorber eine Glycidylgruppe.
Beispiele für erfindungsgemäß verwendbare reaktive UV-Absorber sind die folgenden Verbindungen:
1) 2-(2-Hydroxyphenyl)benzotriazole 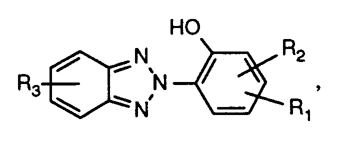 worin R₁-R₃ für -OH, -COOH, 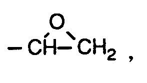 Wasserstoff, C₁-C₁₈Alkyl, C₁-C₁₈-Alkoxy, C₂-C₁₈-Alkoxycarbonyl, C₇-C₉-Aralkyl oder für eine Sulfonsäuregruppe stehen und die Gruppen -OH, -COOH oder 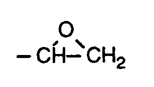 direkt oder über ein Zwischenglied an den aromatischen Ring gebunden sein können, mit der Maßgabe, daß mindestens einer der Reste R₁-R₃ für eine Gruppe -OH, -COOH oder 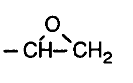 steht oder eine solche enthält.
   Stehen R₁, R₂ oder R₃ für C₁-C₁₈Alkyl, so kann es sich um geradkettiges oder verzweigtes Alkyl handeln und beispielsweise Methyl, Ethyl, n-Propyl, i-Propyl, n-Butyl, t-Butyl, Pentyl, Hexyl, Heptyl, Octyl, 2-Ethylhexyl, Decyl, Dodecyl oder Octadecyl bedeuten.
   R₁, R₂ oder R₃ als C₁-C₁₈-Alkoxy so kann der Alkylrest am O-Atom geradkettige oder verzweigt sein und beispielsweise Methoxy, Ethoxy, n-Propyloxy, i-Propyloxy, n-Butyloxy, t-Butyloxy, Pentyloxy, Hexyloxy, Heptyloxy, Octyloxy, 2-Ethylhexyloxy, Decyloxy, Dodecyloxy oder Octadecyloxy bedeuten.
   Sind R₁, R₂ oder R₃ C₂-C₁₈-Alkoxycarbonyl so können sie z.B. die für Alkoxy angegeben Bedeutungen ab Ethoxy unter Anhängen des Begriffs Carbonyl annehmen.
   R₁, R₂ oder R₃ als C₇-C₉-Aralkyl bedeuten beispielsweise Benzyl, Phenylethyl, Phenylpropyl oder α-Methylbenzyl.
   Zwischenglieder sind z.B. -O-, -(CH₂)ₙ-COO-, -(CH₂)ₙ-COO-(CH₂)ₙ-O- oder -OOC-(CH₂)ₙ-O-, wobei n eine Zahl von 1 bis 4 bedeutet.
   Beispiele für 2-(2-Hydroxyphenyl)benzotriazole mit reaktiven Gruppen sind Verbindungen der Formel 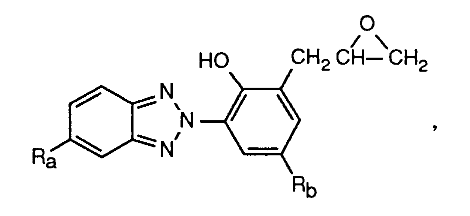 worin Rₐ Wasserstoff,
   Cl, -CH₃ oder -OCH₃ bedeutet und R_{b} für -CH₃, -C(CH₃)₃ oder -C(CH₃)₂-CH₂-C(CH₃)₃ steht.
   Andere Beispiele sind Verbindungen der Formel 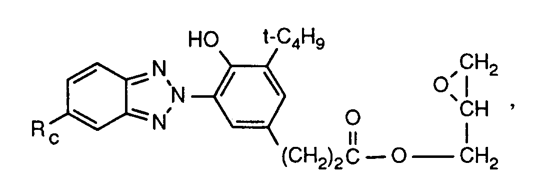 worin R_{c} für Wasserstoff oder Chlor steht.
   Weitere Beispiele sind die Verbindungen 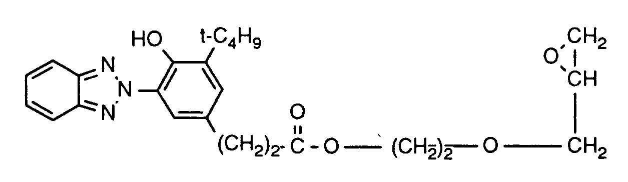 und 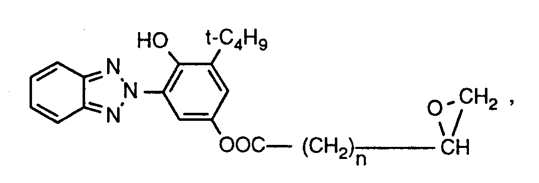 worin n eine Zahl von 1-4 bedeutet, sowie 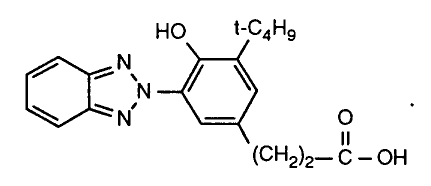
2) 2-(2-Hydroxyphenyl)triazine 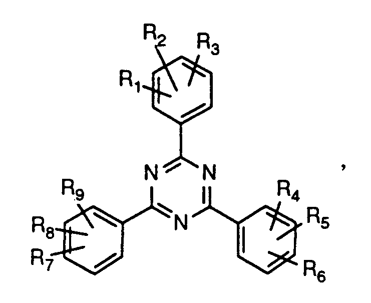 worin R₁-R₉ für -OH,-COOH, 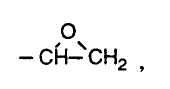 Wasserstoff, C₁-C₁₈Alkyl, C₁-C₁₈-Alkoxy, C₂-C₁₈-Alkoxycarbonyl, C₇-C₉-Aralkyl oder für eine Sulfonsäuregruppe stehen und die Gruppen -OH,-COOH, 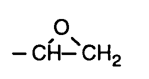 direkt oder über ein Zwischenglied an den aromatischen Ring gebunden sein können, mit der Maßgabe, daß mindestens einer der Reste R₁-R₉ für eine Gruppe -OH, -COOH oder 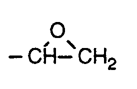 steht, oder eine solche enthält, und, daß mindestens einer der Reste R₁-R₉ für eine o-Hydroxy-Gruppe steht, die nicht die reaktive Gruppe darstellt.
   Stehen R₁-R₉ für C₁-C₁₈Alkyl, C₁-C₁₈-Alkoxy, C₂-C₁₈-Alkoxycarbonyl oder C₇-C₉-Aralkyl so können sie die gleichen Bedeutungen annehmen, wie bei den Benzotriazolen für die Reste R₁-R₃ aufgeführt ist.
   Beipiele für die Bedeutungen der Zwischenglieder sind bei den Benzotriazolen aufgeführt.
   Beispiele für Hydroxyphenyltriazine sind: 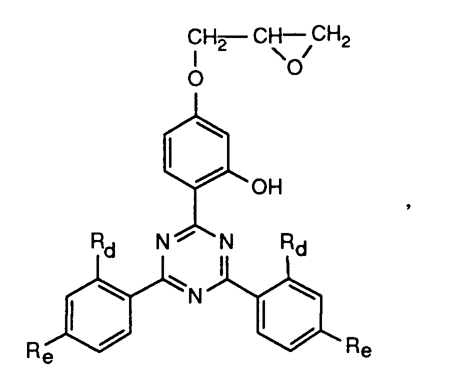 worin R_{d}=H und Rₑ=H oder R_{d}=H und
   Rₑ=-CH₃,oder R_{d}=-CH₃ und Rₑ=-CH₃ sind.
   Ein weiteres Beispiel ist die Verbindung der Formel 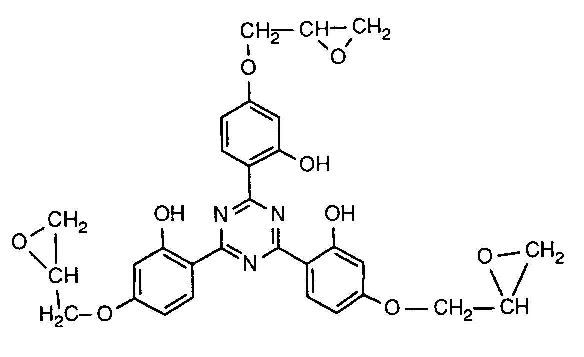 Andere Beispiele sind Verbindungen der Formeln 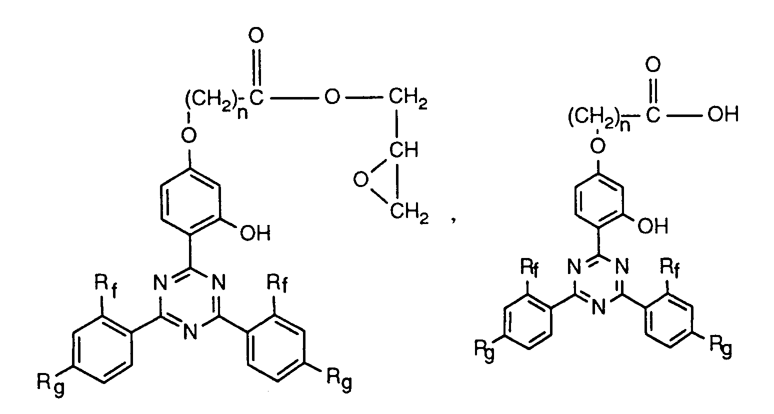 und 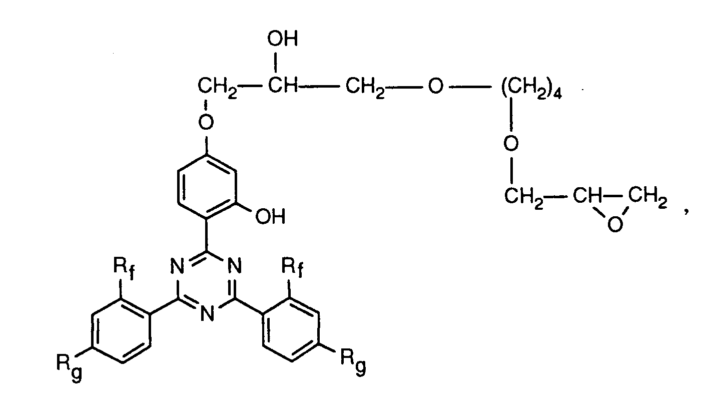 worin
   R_{f}=H und R_{g}=H oder R_{f}=H und R_{g}=-CH₃ oder R_{f}=-CH₃ und R_{g}=CH₃ sind, sowie 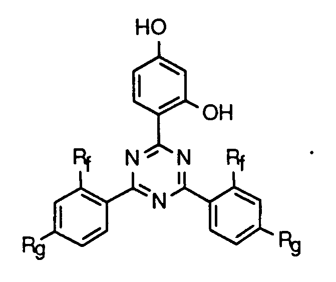
3) o-Hydroxybenzophenone 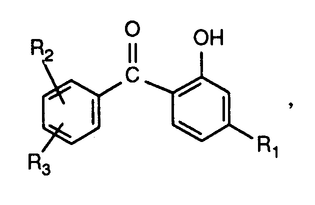 worin
   R₁-R₃ für -OH, -COOH, 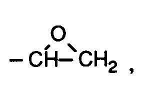 Wasserstoff, C₁-C₁₈Alkyl, C₁-C₁₈-Alkoxy, C₂-C₁₈-Alkoxycarbonyl, C₇-C₉-Aralkyl oder für eine Sulfonsäuregruppe stehen und die Gruppen -OH, -COOH oder 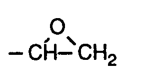 direkt oder über ein Zwischenglied an den aromatischen Ring gebunden sein können, mit der Maßgabe, daß mindestens einer der Reste R₁-R₃ für eine Gruppe -OH, -COOH, oder 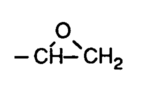 steht oder eine solche enthält.
   Stehen R₁-R₃ für C₁-C₁₈Alkyl, C₁-C₁₈-Alkoxy, C₂-C₁₈-Alkoxycarbonyl oder C₇-C₉-Aralkyl so können sie die gleichen Bedeutungen annehmen, wie bei den Benzotriazolen für die Reste R₁-R₃ aufgeführt ist.
   Beipiele für die Bedeutungen der Zwischenglieder sind bei den Benzotriazolen aufgeführt.
   Bevorzugt sind Benzophenone, worin R₂ und R₃ gleichzeitig oder unabhängig voneinander Wasserstoff, C₁-C₁₂-Alkyl oder C₁-C₁₂-Alkoxy bedeuten und R₁ für eine Gruppe -O-A steht, worin A für Wasserstoff oder einen Rest -(CH₂)ₓ-B, 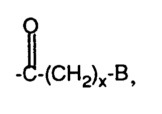 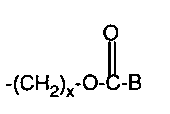 oder 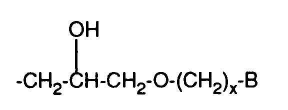 steht, worin x eine Zahl von 1-12 bedeutet und B für-OH, -COOH oder 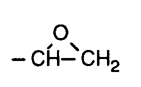 steht.
   Beispiele für Benzophenone mit reaktiven Gruppen sind beispielsweise die verbindungen 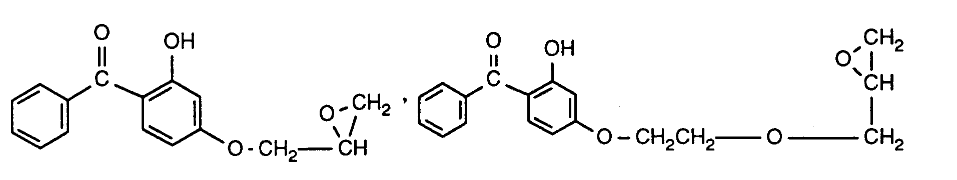 und 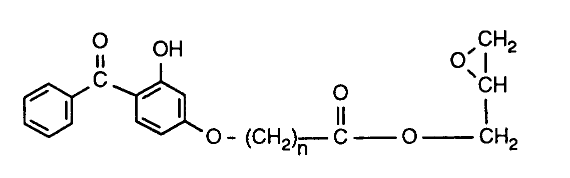 und 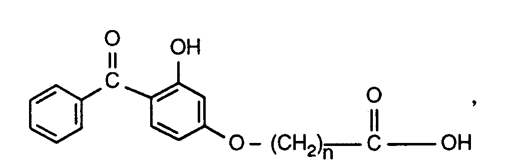 worin n für 1-4 steht, sowie 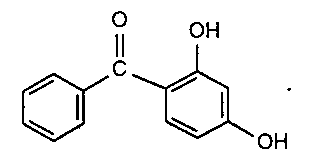
4) Oxalanilide 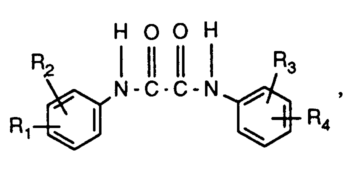 worin R₁-R₄ für -OH, -COOH, 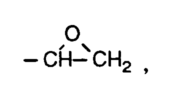 Wasserstoff, C₁-C₁₈Alkyl, C₁-C₁₈-Alkoxy, C₂-C₁₈-Alkoxycarbonyl, C₇-C₉-Aralkyl oder für eine Sulfonsäuregruppe stehen und die Gruppen -OH, -COOH, 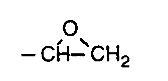 direkt oder über ein Zwischenglied an den aromatischen Ring gebunden sein können, mit der Maßgabe, daß mindestens einer der Reste R₁-R₄ für eine Gruppe -OH, -COOH, oder 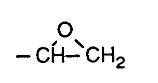 steht oder eine solche enthält.
   Stehen R₁-R₄ für C₁-C₁₈Alkyl, C₁-C₁₈-Alkoxy, C₂-C₁₈-Alkoxycarbonyl oder C₇-C₉-Aralkyl so können sie die gleichen Bedeutungen annehmen, wie bei den Benzotriazolen für die Reste R₁-R₃ aufgeführt ist.
   Beispiele für Zwischenglieder sind bei den Benzotriazolen aufgeführt.
   Bevorzugt sind Oxalanilide der Formel 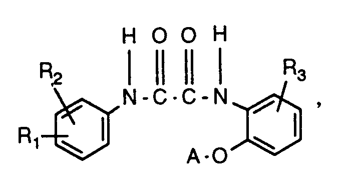 worin R₁-R₃ gleichzeitig oder unabhängig voneinander Wasserstoff, C₁-C₁₈-Alkyl, C₁-C₁₈-Alkoxy oder C₂-C₁₈-Alkoxycarbonyl bedeuten und A für Wasserstoff oder einen Rest -(CH₂)ₓ-B, 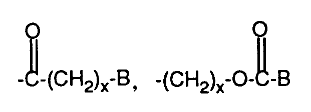 oder 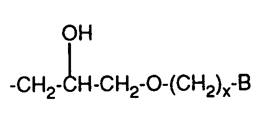 steht, worin x eine Zahl von 1-12 bedeutet und B für -OH, -COOH oder 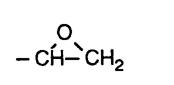 steht.
   Beispiele für Oxalanilide mit reaktiven Gruppen sind die Verbindungen 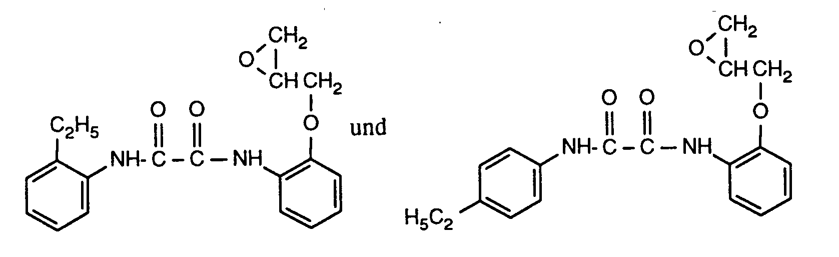 Bevorzugte UV-Absorber sind Benzotriazole und Triazine, insbesondere Benzotriazole.

Die Herstellung der oben aufgeführten UV-Absorber-Verbindungsklassen ist dem Fachmann bekannt.

Die Umsetzung der Copolymeren (a) mit den reaktiven UV-Absorbern geschieht vorzugsweise in Lösung. Als Lösungsmittel eignen sich inerte unpolare oder polare Lösungsmittel, wie z.B. Toluol, Xylol, Dioxan, Tetrahydrofuran, Methyl-ethylketon, Cyclohexanon, Butylacetat, Trichlorethylen oder Dimethylformamid. Mit Vorteil verwendet man Gemische von Lösungsmitteln.
Sofern die Herstellung des Copolymers in Lösung geschieht, kann man die erhaltene Lösung des Copolymers zur Reaktion mit dem UV-Absorber verwenden, ohne das Copolymer zu isolieren.
Die Reaktion kann durch Erwärmen und durch Zusatz von Katalysatoren beschleunigt werden. Als Katalysatoren werden solche verwendet, die auch für entsprechende Reaktionen mit nicht-polymeren Verbindungen bekannt sind. Z.B. kann man für Veresterungen saure Katalysatoren verwenden, für Umesterungen Alkalialkoholate und für Umsetzungen von Epoxiden mit Hydroxylgruppen tertiäre Amine.

Zur Isolierung des Endproduktes kann die Lösung eingedampft werden oder man fällt das Endprodukt durch Zusatz eines Nicht-Lösungsmittels.

Falls man ein Copolymer (a) verwendet, welches noch kein 2,2,6,6-Tetramethylpiperidinderivat in copolymerisierter Form enthält, besteht eine weitere Ausgestaltung des Verfahrens darin, das man das Copolymer zusätzlich zum reaktiven UV-Absorber auch mit einem reaktiven 2,2,6,6-Tetramethylpiperidinderivat umsetzt. Die gleichzeitige Anwesenheit eines solchen sterisch gehinderten Amins und eines UV-Absorbers erbringt oft eine synergistische Stabilisatorwirkung.
Die Tetramethylpiperidinderivate haben die gleichen reaktiven Gruppen wie die UV-Absorber, also z.B. Hydroxyl-, Carboxyl- oder Epoxidgruppen.

Beispiele für 2,2,6,6-Tetramethylpiperidinderivate mit reaktiven Gruppen sind die Verbindungen 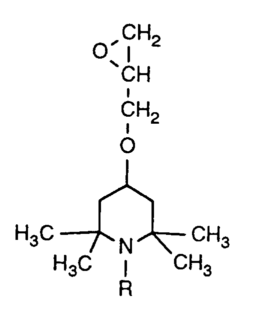
und 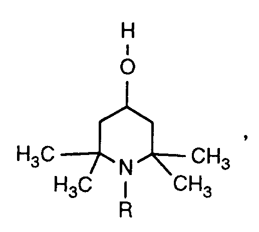
worin R für Wasserstoff, C₁-C₄-Alkyl, -CH₂-CH=CH₂, Benzyl, 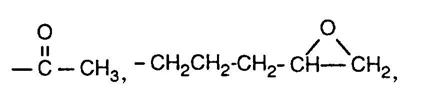 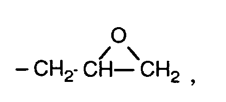
C₁-C₁₂-Alkoxy oder C₅-C₆-Cycloalkyloxy steht.

R als C₁-C₄-Alkyl kann geradkettig oder verzweigt sein und bedeutet beispielsweise Methyl, Ethyl, n-Propyl, i-Propyl, n-Butyl oder t-Butyl.

Als C₁-C₁₂-Alkoxy ist R z.B. Methoxy, Ethoxy, Propyloxy, Butyloxy, Pentyloxy, Hexyloxy, Octyloxy, Decyloxy oder Dodecyloxy.

R als C₅-C₆-Cycloalkyloxy bedeutet Cyclopentyloxy oder Cyclohexyloxy.

Andere Beispiele für solche Verbindungen sind 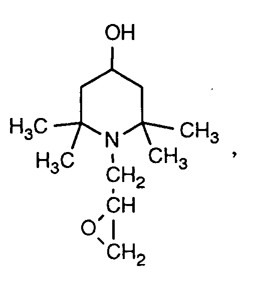 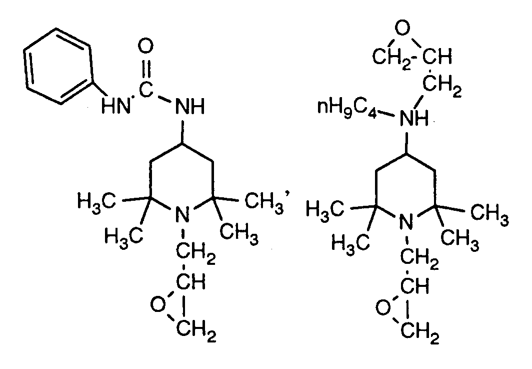
und 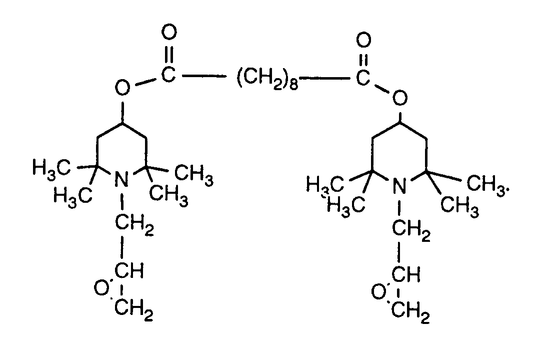
Die Reaktion des Copolymeren mit dem Tetramethylpiperidinderivat kann gleichzeitig mit der Reaktion mit dem reaktiven UV-Absorber geschehen, oder man führt beide Reaktionen nacheinander aus.
Die Menge des reaktiven UV-Absorbers wird vorzugsweise so bemessen, daß das modifizierte Copolymer 0,05 bis 20 Gew.-%, vorzugsweise 0,05 bis 10, insbesondere 0,05 bis 5 Gew.-% UV-Absorber enthält. Falls auch mit einem Piperidinderivat modifiziert wird, so sollte das modifizierte Copolymer vorzugsweise 0,05 bis 5 Gew.-% Piperidinderivat enthalten.

Die Komponente (b) ist ein (Meth)Acryl-Copolymer, wie es üblicherweise als Bindemittel für Lacke verwendet wird. Diese Copolymere werden auch Acrylharze genannt. Sie bestehen in der Hauptmenge aus einem oder mehreren Alkylacrylaten oder - methacrylaten und enthalten in kleinerer Menge ein funktionelles Acrylat oder Methacrylat. Das (Meth)Acryl-Copolymer enthält demnach funktionelle Gruppen, die mit einem geeigneten Härter unter Vernetzung reagieren können.

Solche Acrylharze sind in großer Auswahl kommerziell verfügbar. Bevorzugt vewendet man ein Acrylharz, das ein Copolymer aus mehreren Alkylacrylaten oder -methacrylaten, einem Hydroxyalkyl(meth)acrylat und Acryl- oder Methacrylsäure ist.

Die Komponente (c) ist ein Härter, der mit den funktionellen Gruppen der Komponenten (a) und (b) reagieren kann. Vorzugsweise verwendet man hierfür ein Melaminharz oder ein Polyisocyanat oder ein Gemisch beider.

Die als Härter geeigneten Melaminharze sind vor allem N-Hydroxymethyl- und N-Alkoxymethylderivate des Melamins. Solche als Härter geeignete Melaminderivate sind im Handel erhältlich und werden üblicherweise zur Härtung von Acrylharzen verwendet.

Als Härter geeignete Polyisocyanate sind vor allem Diisocyanate und Triisocyanate, wie z.B. Toluoldiisocyanat, Diphenylmethan-4,4'-diisocyanat, Hexamethylendiisocyanat oder Isophorondiisocyanat, sowie deren dimerisierte, trimerisierte oder verkappte Derivate.

Das Verhältnis von (a) zu (b) kann in weitem Bereich variiert werden. Vorzugsweise beträgt das Gewichtsverhältnis von (a):(b) 20:80 bis 80:20. Die Menge an Härter (c) richtet sich nach der Menge an funktionellen Gruppen in (a) und (b). Vorzugsweise verwendet man 3 bis 80 Gew.-Teile Härter auf 100 Teile der Summe von (a) und (b). In einer bevorzugten Ausführungsform besteht das erfindungsgemäße Gemisch aus 30-50 Gew.-% (a), 30-50 Gew.-% (b) und 10-25 Gew.-% (c).

Die erfindungsgemäßen Zusammensetzungen können als Bindemittel für witterungsbeständige Lacke verwendet werden. Im einfachsten Fall enthalten die Lacke eine erfindungsgemäße Zusammensetzung und ein Lösungsmittel. Die Lacke können Klarlacke oder pigmentierte Lacke sein. Als Pigmente können anorganische, organische oder metallische Pigmente verwendet werden. Durch Zusatz von Lösungsmitteln oder Verdickungsmitteln kann die Viskosität der Lacke reguliert werden. Die Lacke können weitere Zusätze enthalten, wie z.B. Füllstoffe, Weichmacher, Verlaufhilfsmittel, Haftverbesserer, Härtungsbeschleuniger, Antioxidantien oder Lichtschutzmittel. Von besonderer Bedeutung ist der Zusatz von Lichtschutzmitteln aus der Klasse der sterisch gehinderten Amine, da diese mit dem eingebauten UV-Absorber des Bindemittels eine synergistische Steigerung der Witterungsbeständigkeit bewirken können. Beispiele für sterisch gehinderte Amine sind vor allem Derivate des 2,2,6,6-Tetramethylpiperidins, wie sie z.B in Kunststoffe 77 (1987) 1065-69 ,in der EP-A-15 652 auf Seite 5-17 oder in der EP-A-293 871 beschrieben sind.

Je nach dem verwendeten Härter können diese Lacke bei Raumtemperatur oder bei erhöhter Temperatur gehärtet werden. In jedem Fall wird die Härtung durch Erwärmen (Einbrennen) beschleunigt. Eine Beschleunigung kann auch durch Zusatz von Härtungskatalysatoren bewirkt werden. So kann z.B. die Härtung mit Isocyanaten durch zinnorganische Verbindungen oder durch basische Katalysatoren (z.B. tertiäre Amine) beschleunigt werden. Die Härtung mit Melaminharzen kann durch saure Katalysatoren beschleunigt werden, beispielsweise durch Zusatz von Toluolsulfonsäure.

Die gehärteten Lacke zeichnen sich nicht nur durch hohe Witterungsbeständigkeit, sondern auch durch hohen Glanz aus. Als Substrate können die üblichen Unterlagen, wie Metall, Holz, keramische Materialien oder Kunststoffe dienen. Bei mehrschichtigen Anstrichen verwendet man die Lacke mit den erfindungsgemäß modifizierten Anstrichstoffe vorzugsweise als Deckschicht, da sie die Einstrahlung des UV-Lichtes abschirmen. Die gehärteten Lackfilme sind ebenfalls Gegenstand der Erfindung.

Die nachfolgenden Beispiele erläutern die Erfindung näher. Angaben in Teilen und Prozenten darin, sowie in der übrigen Beschreibung und den Patentansprüchen, beziehen sich auf das Gewicht, sofern nichts anderes angegeben ist. Bei Lacken beziehen sich Prozentangaben auf das Gewicht der festen Lackbestandteile, sofern nichts anderes angegeben ist.

### Beispiel 1: Herstellung eines Fluor-haltigen Harzes ohne Lichtschutzmittel

In einem 1 Liter Autoklaven mit Rührer werden unter Stickstoff 75 g Cyclohexylvinylether, 43 g Ethyl-vinylether und 35 g Hydroxybutyl-vinylether in 340 ml Xylol gelöst und 6 g Kaliumcarbonat, sowie 0,3 g Azoisobutyronitril zugegeben. Zu dieser Mischung werden 150 g Chlortrifluorethylen gegeben, der Autoklav geschlossen und unter Rühren auf 65 °C erwärmt. Diese Temperatur wird 7 h gehalten, danach wird auf Raumtemperatur abgekühlt. Nach dem Abfiltrieren der erhaltenen Suspension werden zu dem Filtrat 25 g Bernsteinsäureanhydrid gegeben und die Lösung auf 110 °C erwärmt. Diese Temperatur wird 2 h gehalten, danach wird auf Raumtemperatur abgekühlt. Man erhält eine 50 %ige Polymerlösung, welche 0,25 Mol Carboxylgruppen enthält.

### Beispiel 2: Herstellung eines Fluor-haltigen Harzes + Benzotriazol (UV-1)

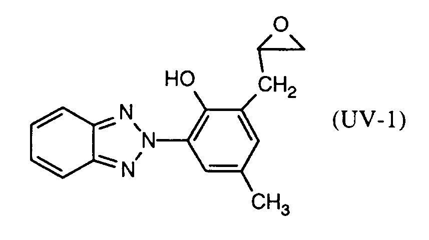

In einem 2 Liter Glaskolben werden 600 g der Polymerlösung aus Beispiel 1 mit 15 g der Verbindung UV-1 gemischt und 48 h zum Rückfluß erhitzt (Innentemperatur ca. 110 °C) Hierbei reagieren die Epoxidgruppen der Verbindung UV-1 mit den Carboxylgruppen des Fluor-haltigen Harzes. Das Polymer enthält gemäß Elentaranalyse 5 % der Benzotriazolverbindung.

### Beispiel 3: Herstellung eines Fluor-haltigen Harzes + Benzotriazol + Hindered Amine Licht Stabilizer (HALS-1)

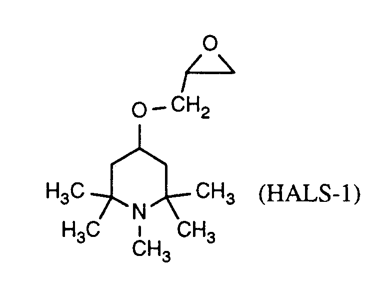

In einem 2 Liter Glaskolben werden 600 g der Polymerlösung aus Beispiel 1 mit 15 g der Verbindung UV-1 und 7,5 g der Verbindung HALS-1 gemischt und 48 h unter Rückfluß erwärmt. Hierbei reagieren die Epoxidgruppen der Verbindungen UV-1 und HALS-1 mit den Carboxylgruppen des Fluorhaltigen Harzes. Das Polymer enthält gemäß Elementaranalyse 5 % der Benzotriazolverbindung und 2,5 % der HALS-Verbindung.

### Beispiel 4: Herstellung eines Silizium-haltigen Harzes ohne Lichtschutzmittel

Eine Mischung von 270 g Xylol und 30 g 4-Methyl-2-pentanon wird auf 105 °C erwärmt. Bei dieser Temperatur wird ein Gemisch aus 30 g 3-Methacryloyloxypropyl-pentamethyldisiloxan, 51 g Styrol, 22 g Methylmethacrylat, 140 g 2-Ethylhexyl-methacrylat, 48 g 2-Hydroxyethyl-methacrylat, 20 g Methacrylsäure und 2,1 g Azoisobutyronitril innerhalb von 4 h zugetropft. Anschließend wird 2 h bei dieser Temperatur gerührt. Man erhält eine ca. 50 %ige Lösung des Copolymeren, welche 0,24 Mol Carboxylgruppen enthält.

### Beispiel 5: Herstellung eines Silizium-haltigen Harzes + Benzotriazol (UV-1)

In einem 2 Liter Glaskolben werden 600 g der in Beispiel 4 beschriebenen Polymerlösung mit 15 g der Verbindung UV-1 gemischt und 48 h am Rückfluß erhitzt. Hierbei reagieren die Epoxidgruppen der Verbindung UV-1 mit den Carboxylgruppen des Silizium-haltigen Harzes. Das Polymer enthält gemäß Elementaranalyse 5 % der Benzotriazolverbindung.

### Beispiel 6: Herstellung eines Silizium-haltigen Harzes + Triazin (UV-2)

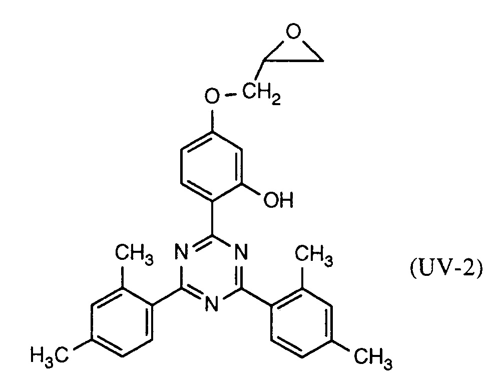

Die Herstellung erfolgt analog zu der in Beispiel 5 beschriebenen Methode, wobei jedoch als Lichtschutzmittel anstelle der Verbindung UV-1 15 g der Verbindung UV-2 eingesetzt werden. Das entstandene Polymer enthält gemäß Elementaranalyse 5 % der Triazinverbindung.

### Beispiel 7: Herstellung eines Silizium-haltigen Harzes + Benzophenon (UV-3)

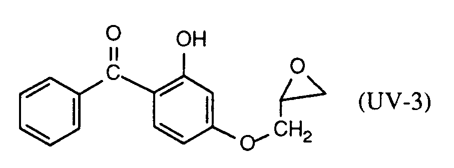

Die Herstellung erfolgt analog zu der in Beispiel 5 beschriebenen Methode, wobei jedoch als Lichtschutzmittel anstelle der Verbindung UV-1 15 g der Verbindung UV-3 verwendet werden. Das erhaltene Polymer enthält gemäß Elementaranalyse 5 % der Benzophenonverbindung.

### Beispiel 8: Herstellung eines Silizium-haltigen Harzes + Benzotriazol (UV-4)

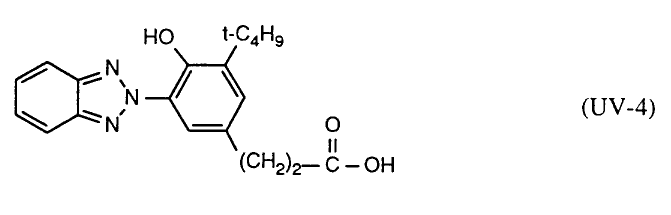

Zu 55 ml trockenem Toluol werden tropfenweise unter Rühren innerhalb von 3 h bei 105°C unter Stickstoff eine Mischung von 12,1 g Methylmethacrylat, 24,2 g Butylmethacrylat, 25,2 g Glycidylmethacrylat und 6,8 g 3-Methacryloyloxypropyl-pentamethyldisiloxan und gleichzeitig eine Lösung von 1,2 g Azoisobutyronitril in 20 ml Toluol gegeben. Die klare Lösung wird anschließend für 1 h zum Rückfluß erhitzt. Darauf werden bei 100°C 33 g der Verbindung UV-4 in die Copolymerlösung eingetragen. Nach 24 h Rückfluß erhält man aus der anfänglichen Suspension eine klare Lösung. Der Feststoffgehalt beträgt 35 %. Der Klarlack enthält 33 % UV-4, bezogen auf den Festkörper.

### Beispiel 9: Herstellung eines Silizium-haltigen Harzes + Triazin (UV-5)

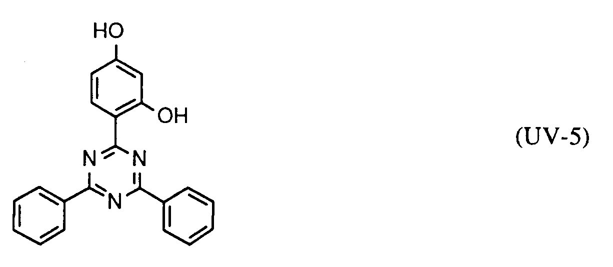

Zu 16,7 ml trockenem Toluol werden tropfenweise unter Rühren innerhalb von 3 h bei 105°C unter Stickstoff eine Mischung von 3,7 g Methylmethacrylat, 7,4 g Butylmethacrylat, 7,6 g Glycidylmethacrylat und 2,1 g 3-Methacryloyloxypropyl-pentamethyldisiloxan und gleichzeitig eine Lösung von 0,4 g Azoisobutyronitril in 6 ml Toluol gegeben.

Die klare Lösung wird anschließend für 1 h zum Rückfluß erhitzt. Darauf werden bei 100°C 10 g der Verbindung UV-5 in die Copolymerlösung eingetragen. Nach 24 h Rückfluß erhält man aus der anfänglichen Suspension eine klare Lösung. Der Feststoffgehalt beträgt 14 %. Der Klarlack enthält 33 % UV-5, bezogen auf den Festkörper.

### Anwendunosbeispiele

Beispiel 10: Es wird ein Gemisch bereitet aus (a) 19,5 Teilen eines wie in Beispiel 2 hergestellten lichtschutzmittel- und fluorhaltigen Copolymers, (b) 19,5 Teilen eines Acrylatharzes (Copolymerisat aus 31 % Ethylacrylat, 29,5 % Methylmethacrylat, 20,2 % 2-Ethylhexylmethacrylat, 16,2 % 2-Hydroxyethyl-methacrylat und 3,1 % Methacrylsäure) und (c) 9,8 Teilen eines Melaminharzes (Cymel® 1130, Cyanamid Corp.) als Vernetzer. Der Mischung werden 0,2 % p-Toluolsulfonsäure als Katalysator zugefügt. Die erfindungsgemäße Zusammensetzung enthält 2 % UV-1 (eingebaut). Als Vergleich dient eine Mischung, welche als Komponente (a) 19,5 Teile des in Beispiel 1 hergestellten fluorhaltigen Copolymers (ohne UV-Absorber) enthält.

Die Klarlackmischung wird mit Xylol auf Spritzfähigkeit eingestellt, auf ein mit einem silbermetallic Basislack beschichtetes Aluminiumblech aufgebracht, ca. 15 min. bei Raumtemperatur abgelüftet und anschließend 30 min bei 130 °C eingebrannt. Es resultiert eine Trockenfilmdicke von ca. 45 µm. Das Prüfblech wird in der Schnellbewitterung (UVCON®, Atlas Corp.; UVB 313 Lampen, Zyklus 8 h UV, 4 h Kondensation 50 °C) geprüft. Vor Beginn und nach 2000 h Bewitterung wird der 60° Glanz nach DIN 67530 ermittelt. Tabelle 1 gibt als Resultat des Bewitterungstests die Glanzhaltung nach 2000 h wieder (Glanzhaltung nach 0 h Bewitterung = 100 %).

**Tab. 1**

| Glanzhaltung des Klarlacks nach 2000 h Bewitterung (60° Glanz nach DIN 67530) | |
|---|---|
| Komponente (a) aus | Glanzhaltung nach 2000 h |
| Beisp.1 (unstabilisiert) | 24 % |
| Beisp.2 (enth. UV-1) | 75 % |

Die Lichtschutzmittel enthaltende Probe ergibt gute Glanzhaltung und Rißfreiheit.

Beispiel 11: Es wird nach der in Beispiel 10 beschriebenen Methode ein Klarlack hergestellt und appliziert, der anstelle des fluorhaltigen Copolymers aus den Beispielen 1 und 2 das siliziumhaltige Copolymer aus den Beispielen 4-6 enthält. Der aus dem Copolymer aus Beispiel 5 hergestellte Lack enthält 2 % UV-1 (eingebaut), der aus dem Copolymer aus Beispiel 6 enthält 2 % UV-2 (eingebaut). Die Lackproben werden wie in Beispiel 10 bewittert. Vor Beginn und nach 800 h Bewitterung wird der 60° Glanz nach DIN 67530 ermittelt. Tabelle 2 gibt als Resultat des Bewitterungstests die Glanzhaltung nach 800 h wieder (Glanzhaltung nach 0 h Bewitterung = 100 %).

**Tab. 2**

| Glanzhaltung des Klarlacks nach 800 h Bewitterung (60° Glanz nach DIN 67530) | |
|---|---|
| Komponente (a) aus | Glanzhaltung nach 800 h |
| Beisp.4 (unstabilisiert) | 32 % |
| Beisp.5 (enth. UV-1) | 40 % |
| Beisp.6 (enth. UV-2) | 53 % |

Beispiel 12: Es wird ein Gemisch bereitet aus (a) 19,5 Teilen eines der in den Beispielen 1-3 hergestellten fluorhaltigen Copolymere, (b) 19,5 Teilen eines Acrylatharzes (Copolymerisat aus 31 % Ethylacrylat, 29,5 % Methylmethacrylat, 20,2 % 2-Ethylhexylmethacrylat, 16,2 % 2-Hydroxyethyl-methacrylat und 3,1 % Methacrylsäure) und (c) 5,25 Teilen eines Isocyanats (Desmodur®N 75, Bayer AG) als Vernetzer.
Applikation und Prüfung auf Glanzhaltung erfolgt wie in Beispiel 10 beschrieben, wobei 45 min bei 80 °C eingebrannt und die Glanzhaltung nach 2200 h Bewitterung gemessen wird. Die Trockenfilmdicke des Lackes beträgt ca. 45 µm. Der aus dem Copolymer aus Beispiel 2 hergestellte Lack enthält 2,2 % UV-1 (eingebaut), der aus dem Copolymer aus Beispiel 3 enthält 2,2 % UV-1 (eingebaut) und 1,1 % HALS-1 (eingebaut).
Tabelle 3 gibt als Resultat des Bewitterungstests die Glanzhaltung nach 2200 h wieder (Glanzhaltung nach 0 h Bewitterung = 100 %).

**Tab. 3**

| Glanzhaltung des Klarlacks nach 2200 h Bewitterung (60° Glanz nach DIN 67530) | |
|---|---|
| Komponente (a) aus | Glanzhaltung nach 2200 h |
| Beisp.1 (unstabilisiert) | 19 % |
| Beisp.2 (enth. UV-1) | 45 % |
| Beisp.3 (enth. UV-1 und HALS-1) | 50 % |

Die Lichtschutzmittel enthaltenden Proben zeigen gute Glanzhaltung und Rißfreiheit.

Beispiel 13: Beispiel 12 wird wiederholt, wobei die fluorhaltigen Copolymere aus den Beispielen 1-3 durch die siliziumhaltigen Copolymere aus den Beispielen 4-7 ersetzt werden. Der aus dem Copolymer aus Beispiel 5 hergestellte Lack enthält 2,2 % UV-1 (eingebaut), der aus den, Copolymer aus Beispiel 6 enthält 2,2 % UV-2 (eingebaut), der aus dem Copolymer aus Beispiel 7 enthält 2,2 % UV-3 (eingebaut). Einem Klarlack basierend auf dem Copolymer aus Beispiel 5 werden zusätzlich 1 % Bis-(1,2,2,6,6-pentamethyl-4-piperidyl)-sebacat (HALS-2; Menge bezogen auf den Festkörpergehalt) zugesetzt.
Tabelle 4 gibt als Resultat des Bewitterungstests die Glanzhaltung nach 2000 h wieder (Glanzhaltung nach 0 h Bewitterung = 100 %).

**Tab. 4**

| Glanzhaltung des Klarlacks nach 2000 h Bewitterung (60° Glanz nach DIN 67530) | |
|---|---|
| Komponente (a) aus | Glanzhaltung nach 2000 h |
| Beisp.4 (unstabilisiert) | 15 % |
| Beisp.5 (enth. UV-1) | 90 % |
| Beisp.6 (enth. UV-2) | 100 % |
| Beisp.7 (enth. UV-3) | 62 % |
| Beisp.5 (enth. UV-1) + HALS-2* | 100 % |

| | |
|---|---|
| * HALS-2 = Bis-(1,2,2,6,6-Pentamethyl-4-piperidyl)-sebacat | |

Die Lichtschutzmittel enthaltenden Proben zeigen gute Glanzhaltung und Rißfreiheit.

## Patentansprüche

1. Härtbare Zusammensetzung enthaltend (a) ein Fluor oder Silizium enthaltendes Copolymer, (b) ein (Meth)Acryl-Copolymer, und (c) mindestens einen Härter, wobei jedes der beiden Copolymeren funktionelle Gruppen enthält, die mit dem Härter reagieren können und die dadurch gekennzeichnet ist, daß das Fluor oder Silizium enthaltende Copolymer (a) einen UV-Absorber enthält, der durch Reaktion mit den freien reaktiven Gruppen des fertigen Copolymers chemisch gebunden ist.

2. Zusammensetzung gemäß Anspruch 1, dadurch gekennzeichnet, daß die Copolymeren (a) und (b) Hydroxylgruppen enthalten und der Härter eine Verbindung ist, die mit Hydroxylgruppen reagieren kann.

3. Zusammensetzung gemäß Anspruch 1, dadurch gekennzeichnet, daß der reaktive UV-Absorber eine Verbindung aus der Klasse der 2-(2-Hydroxyphenyl)-benzotriazole, der 2-(2-Hydroxyphenyl)-1,3,5-triazine, der Oxalanilide oder der o-Hydroxybenzophenone ist.

4. Zusammensetzung gemäß Anspruch 1, dadurch gekennzeichnet, daß der reaktive UV-Absorber ein Derivat des 2-(2-Hydroxyphenyl)-benzotriazols oder 2-(2-Hydroxyphenyl)-1,3,5-triazins ist.

5. Zusammensetzung gemäß Anspruch 1, dadurch gekennzeichnet, daß das Copolymer Carboxylgruppen enthält und der reaktive UV-Absorber eine Epoxidgruppe enthält.

6. Zusammensetzung gemäß Anspruch 1, dadurch gekennzeichnet, daß die Komponente (a) ein Copolymer ist aus
(1) einem Polyfluorolefin,
(2) mindestens einem Alkyl- und/oder Cycloalkyl-vinylether,
(3) einem Hydroxyalkyl-vinylether, und
(4) gegebenenfalls weiteren copolymerisierbaren Verbindungen.

7. Zusammensetzung gemäß Anspruch 6, dadurch gekennzeichnet, daß das Copolymer ein Umsetzungsprodukt von einem Copolymerisat aus Chlortrifluorethylen, Hydroxybutylvinylether und mindestens einem Alkyl- oder Cycloalkyl-vinylether mit einem Dicarbonsäureanhydrid ist, das freie Carboxylgruppen enthält.

8. Zusammensetzung gemäß Anspruch 1, dadurch gekennzeichnet, daß die Komponente (a) ein Copolymer ist aus
(1) einer ethylenisch ungesättigten Organosiliziumverbindung,
(2) mindestens einem Alkyl- acrylat oder -methacrylat,
(3) einem Hydroxyalkyl(meth)acrylat und/oder Epoxyalkyl(meth)acrylat und
(4) gegebenenfalls weiteren copolymerisierbaren Verbindungen.

9. Zusammensetzung gemäß Anspruch 8, dadurch gekennzeichnet, daß die Komponente (1) eine Verbindung der Formel 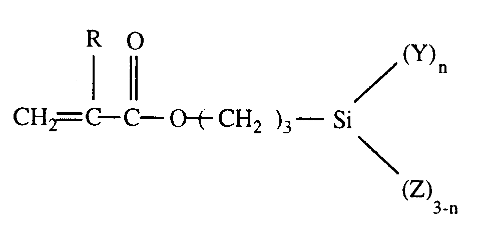 oder 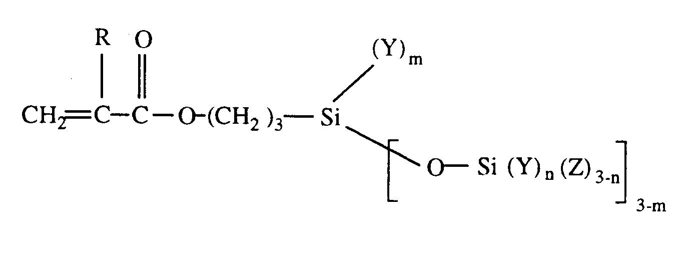 ist,
worin n 0-3, m 0-3, R Wasserstoff oder CH₃, Y C₁-C₈-Alkyl oder Phenyl und Z C₁-C₈-Alkoxy oder -OCH₂CH₂OCH₃ bedeuten, und als Komponente (2) ein C₁-C₁₂-Alkyl(meth)acrylat, und als Komponente (3) ein C₂-C₆-Hydroxyalkyl(meth)-acrylat oder Glycidyl(meth)acrylat eingesetzt wird.

10. Zusammensetzung gemäß Anspruch 1, dadurch gekennzeichnet, daß die Komponente (b) ein Copolymer aus mehreren Alkylacrylaten oder -methacrylaten, einem Hydroxyalkyl(meth)acrylat und Acryl- oder Methacrylsäure ist.

11. Zusammensetzung gemäß Anspruch 1, dadurch gekennzeichnet, daß die Komponente (c) ein Melaminharz und/oder ein Polyisocyanat ist.

12. Zusammensetzung gemäß Anspruch 1, dadurch gekennzeichnet, daß das Gewichtsverhältnis von (a) zu (b) 20:80 bis 80:20 beträgt und das Gewichtsverhältnis von (c) zur Summe von (a) und (b) 3-80 zu 100 beträgt.

13. Zusammensetzung gemäß Anspruch 1, dadurch gekennzeichnet, daß das Copolymer (a) ein copolymerisiertes sterisch gehindertes Amin enthält.

14. Zusammensetzung gemäß Anspruch 1, dadurch gekennzeichnet, daß das fertige Copolymer (a) zusätzlich zum reaktiven UV-Absorber auch mit einem reaktiven 2,2,6,6-Tetramethylpiperidinderivat umgesetzt worden ist.

15. Verwendung einer Zusammensetzung gemäß Anspruch 1 als Bindemittel für Klarlacke oder pigmentierte Lacke.

16. Klarer oder pigmentierter Lack, der als Bindemittel eine Zusammensetzung gemäß Anspruch 1 enthält.

17. Klarer oder pigmentierter Lack gemäß Anspruch 16, der ein Lichtschutzmittel aus der Klasse der sterisch gehinderten Amine enthält.

18. Gehärteter Lackfilm, erhalten durch Härtung eines Lackes gemäß Anspruch 16.

19. Verfahren zur Herstellung einer härtbaren Zusammensetzung, dadurch gekennzeichnet, daß ein Fluor oder Silizium enthaltendes Copolymer, das freie funktionelle Gruppen enthält, mit einem UV-Absorber, der reaktive Gruppen enthält, die mit den funktionellen Gruppen des Copolymers reagieren können, umgesetzt wird, und das Produkt mit einem (Meth)Acryl-Copolymer, das ebenfalls funktionelle Gruppen enthält, und einem Härter gemischt wird.

## Claims

1. A curable composition comprising (a) a fluorine- or silicon-containing copolymer, (b) a (meth)acrylic copolymer and (c) at least one curing agent, each of the two copolymers comprising functional groups which can react with the curing agent, wherein the fluorine- or silicon-containing copolymer (a) comprises a UV absorber which is chemically bound by reaction with the free reactive groups of the finished copolymer.

2. A composition according to claim 1, wherein the copolymers (a) and (b) comprise hydroxyl groups, and the curing agent is a compound which can react with the hydroxyl groups.

3. A composition according to claim 1, wherein the reactive UV absorber is a compound from the class of the 2-(2-hydroxyphenyl)-benzotriazoles, the 2-(2-hydroxyphenyl)-1,3,5-triazines, the oxanilides or the o-hydroxybenzophenones.

4. A composition according to claim 1, wherein the reactive UV absorber is a derivative of 2-(2-hydroxyphenyl)-benzotriazole or of 2-(2-hydroxyphenyl)-1,3,5-triazine.

5. A composition according to claim 1, wherein the copolymer comprises carboxyl groups and the reactive UV absorber comprises an epoxide group.

6. A composition according to claim 1, wherein the component (a) is a copolymer of
(1) a polyfluoroolefin,
(2) at least one alkyl vinyl ether and/or cycloalkyl vinyl ether,
(3) a hydroxyalkyl vinyl ether and
(4) if appropriate, further copolymerisable compounds.

7. A composition according to claim 6, wherein the copolymer is a reaction product of a copolymer of chlorotrifluoroethylene, hydroxybutyl vinyl ether and at least one all vinyl ether or cycloalkyl vinyl ether with a dicarboxylic acid anhydride containing free carboxyl groups.

8. A composition according to claim 1, wherein the component (a) is a copolymer of
(1) an ethylenically unsaturated organosilicon compound,
(2) at least one alkyl acrylate or methacrylate,
(3) a hydroxyalkyl (meth)acrylate and/or epoxyalkyl (meth)acrylate and
(4) if appropriate, further copolymerisable compounds.

9. A composition according to claim 8, wherein the component (1) is a compound of the formula 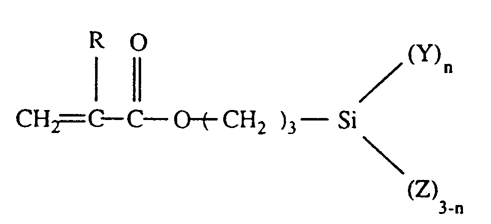 or 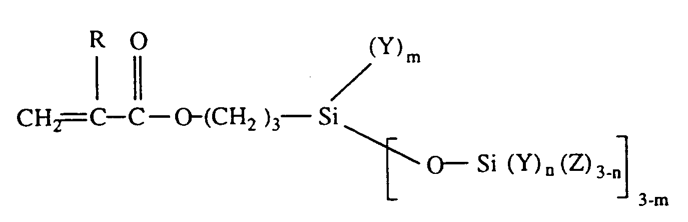 in which n is 0-3, m is 0-3, R is hydrogen or CH₃, Y is C₁-C₈alkyl or phenyl and Z is C₁-C₈alkoxy or -OCH₂CH₂OCH₃, and a C₁-C₁₂alkyl (meth)acrylate is used as component (2), and a C₂-C₆hydroxyalkyl (meth)acrylate or glycidyl (meth)acrylate is used as component (3).

10. A composition according to claim 1, wherein the component (b) is a copolymer of a plurality of all acrylates or methacrylates, a hydroxyalkyl (meth)acrylate and acrylic acid or methacrylic acid.

11. A composition according to claim 1, wherein the component (c) is a melamine resin and/or a polyisocyanate.

12. A composition according to claim 1, wherein the (a):(b) weight ratio is 20:80 to 80:20 and the c:total of (a) and (b) weight ratio is 3-80 to 100.

13. A composition according to claim 1, wherein the copolymer (a) comprises a copolymerised, sterically hindered amine.

14. A composition according to claim 1, wherein the finished copolymer (a) has also been reacted with a reactive 2,2,6,6-tetramethylpiperidine derivative in addition to the reactive UV absorber.

15. The use of a composition according to claim 1 as a binder for clearcoats or pigmented coatings.

16. A clearcoat or pigmented coating, which comprises a composition according to claim 1 as binder.

17. A clearcoat or pigmented coating according to claim 16, which comprises a light stabiliser from the class of the sterically hindered amines.

18. A cured paint film, obtained by curing a coating according to claim 16.

19. A process for preparing a curable composition, which comprises reacting a fluorine- or silicon-containing copolymer comprising free functional groups with a UV absorber comprising reactive groups which can react with the functional groups of the copolymer, and mixing the product with a (meth)acrylic copolymer, which likewise comprises functional groups, and a curing agent.

## Revendications

1. Composition durcissable, contenant (a) un copolymère contenant du fluor ou du silicium, (b) un copolymère (méth)acrylique, et (c) au moins un durcisseur, chacun des deux copolymères contenant des groupes fonctionnels susceptibles de réagir avec le durcisseur, caractérisée en ce que le copolymère (a) contenant du fluor ou du silicium contient un absorbeur UV, qui est lié par liaison chimique par réaction avec les groupes réactifs libres du copolymère fini.

2. Composition selon la revendication 1, caractérisée en ce que les copolymères (a) et (b) contiennent des groupes hydroxyle, et que le durcisseur est un composé pouvant réagir avec les groupes hydroxyle.

3. Composition selon la revendication 1, caractérisée en ce que l'absorbeur UV réactif est un composé choisi parmi l'ensemble comprenant les 2-(2-hydroxyphényl)-benzotriazoles, les 2-(2-hydroxyphényl)-1,3,5-triazines, les oxalanilides ou les o-hydroxybenzophénones.

4. Composition selon la revendication 1, caractérisée en ce que l'absorbeur UV réactif est un dérivé du 2-(2-hydroxyphényl)benzotriazole ou de la 2-(2-hydroxyphényl)-1,3,5-triazine.

5. Composition selon la revendication 1, caractérisée en ce que le copolymère contient des groupes carboxyle et que l'absorbeur UV réactif contient un groupe époxy.

6. Composition selon la revendication 1, caractérisée en ce que le constituant (a) est un copolymère :
(1) d'une polyfluorooléfine,
(2) d'au moins un éther d'alkyle et/ou de cycloalkyle et de vinyle,
(3) d'un éther d'hydroxyalkyle et de vinyle, et
(4) éventuellement d'autres composés copolymérisables.

7. Composition selon la revendication 6, caractérisée en ce que le copolymère est un produit de réaction d'un copolymère de chlorotrifluoréthylène, d'éther d'hydroxybutyle et de vinyle et d'au moins un éther d'alkyle ou de cycloalkyle et de vinyle, avec un anhydride dicarboxylique contenant des groupes carboxyle libres.

8. Composition selon la revendication 1, caractérisée en ce que le constituant (a) est un copolymère :
(1) d'un composé organique du silicium à insaturation éthylénique,
(2) d'au moins un acrylate ou un méthacrylate d'alkyle,
(3) d'un (méth)acrylate d'hydroxyalkyle et/ou d'un (méth)acrylate d'époxyalkyle, et
(4) éventuellement d'autres composés copolymérisables.

9. Composition selon la revendication 8, caractérisée en ce que le constituant (a) est un composé de formule : 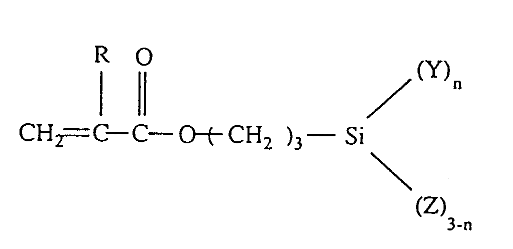 ou 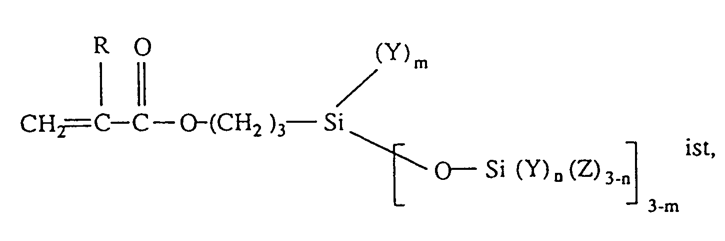 où n vaut de 0 à 3, m vaut de 0 à 3, R est un hydrogène ou CH₃, Y est un radical alkyle en C₁ à C₈, ou phényle, et Z est un radical alcoxy en C₁ à C₈ ou -OCH₂CH₂OCH₃, ou encore que l'on utilise comme constituant (2) un (méth)acrylate d'alkyle en C₁ à C₁₂, et comme constituant (3) un (méth)acrylate d'hydroxyalkyle en C₂ à C₆ ou un (méth)acrylate de glycidyle.

10. Composition selon la revendication 1, caractérisée en ce que le constituant (b) est un copolymère de plusieurs acrylates ou méthacrylates d'alkyle, d'un (méth)acrylate d'hydroxyalkyle et d'acide acrylique ou d'acide méthacrylique.

11. Composition selon la revendication 1, caractérisée en ce que le constituant (c) est une résine de mélamine et/ou un polyisocyanate.

12. Composition selon la revendication 1, caractérisée en ce que le rapport en poids de (a) à (b) est de 20:80 à 80:20, et que le rapport pondéral de (c) à la somme de (a) et de (b) est de 3-80 à 100.

13. Composition selon la revendication 1, caractérisée en ce que le copolymère (a) contient une amine copolymérisée à empêchement stérique.

14. Composition selon la revendication 1, caractérisée en ce que le copolymère (a) fini a été mis à réagir non seulement avec l'absorbeur UV réactif, mais aussi avec un dérivé réactif de la 2,2,6,6-tétraméthylpipéridine.

15. Utilisation d'une composition selon la revendication 1 comme liant pour vernis transparents ou vernis pigmentés.

16. Vernis transparent ou vernis pigmenté contenant comme liant une composition selon la revendication 1.

17. Vernis transparent ou pigmenté selon la revendication 16, qui contient un agent de protection de la lumière, choisi parmi l'ensemble des amines à empêchement stérique.

18. Feuil de vernis durci, obtenu par durcissement d'un vernis selon la revendication 16.

19. Procédé pour préparer une composition durcissable, caractérisé en ce qu'on fait réagir un copolymère contenant du fluor ou du silicium, lequel contient des groupes fonctionnels libres, avec un absorbeur UV contenant des groupes réactifs susceptibles de réagir avec les groupes fonctionnels du copolymère, et que l'on mélange le produit à un copolymère (méth)acrylique, qui contient lui aussi des groupes fonctionnels, et à un durcisseur.
